# EUROPEAN PATENT SPECIFICATION

(11) **EP 2 775 680 B1**
(45) Date of publication and mention of the grant of the patent: **12.09.2018**
(21) Application number: 14157561.3
(22) Date of filing: 04.03.2014
(51) Int. Cl.: H04L 25/03

(54) **Sending and Receiving System, Method of Sending and Receiving, and Receiving Apparatus**
Sende- und Empfangssystem, Verfahren zum Senden und Empfangen, und Empfangsvorrichtung
Système d'envoi et de réception, procédé d'envoi et de réception et appareil de réception

(30) Priority: 04.03.2013 JP 2013041886
(43) Date of publication of application: 10.09.2014
(73) Proprietor: Ricoh Company, Ltd., Tokyo 143-8555 (JP)
(72) Inventor: Ozasa, Dan, Tokyo, 143-8555 (JP)
(74) Representative: Schwabe - Sandmair - Marx

(56) References cited:
- US-A1- 2008 107 167
- US-A1- 2008 175 310
- US-A1- 2009 274 206
- US-A1- 2010 142 606
- US-A1- 2010 172 400
- US-A1- 2011 228 839

## Description

### BACKGROUND OF THE INVENTION

### 1. Field of the Invention

The present invention generally relates to a sending and receiving system, a method of sending and receiving, and a receiving apparatus.

### 2. Description of the Related Art

There is an exemplary sending and receiving system which performs a high-speed serial communication in an embedded clock method where a clock is embedded in data. In this high-speed serial communication, the data rate is about several hundred Mbps to several Gpbs. The sending and receiving system includes a sending circuit and a receiving circuit, and the sending and receiving circuits are formed by a semiconductor integrated circuit. Further, a transmission line for connecting the sending circuit to the receiving circuit is formed by a pattern on poly chlorinated biphenyl (PCB) or a cable connected through a connector.

In this sending and receiving system, it is known that a serial signal is attenuated by a frequency characteristic of the transmission line when the length of the transmission line is elongated or a data rate is made high. As a method of compensating the attenuation of the serial signal by the sending circuit, there is known "emphasis" where a high frequency signal is stressed. Further, there is known an "equalizer" as a method of compensating the attenuation with the receiving circuit. The "equalizer" compensates the high frequency signal by applying inverse characteristics of the transmission line to the receiving circuit.

Because the attenuation of the signal varies depending on the characteristics or the data rate of the transmission line, attenuation characteristics differ depending on the type of a sending and receiving system. Therefore, it is preferable that a device including a receiving circuit can adjust an equalizer amount depending on the system. For example, according to Patent Document 1, an eye pattern of a signal is detected by the receiving circuit and a method of setting the equalizer amount most suitable to the system is disclosed.

Patent Document 1: Japanese Laid-Open Patent Application No. 2010-245616

However, an exemplary method of automatically setting an equalizer amount requires a detection of the value of a signal on the amplitude direction of the signal in order to detect the eye pattern. Further, the exemplary method of automatically setting the equalizer amount requires a very high-speed analog-digital converter (ADC) in order to perform oversampling several times more than unit intervals (1UI) of the signal. Further, because detection data of data pattern for a predetermined period are stored, there is a problem that a memory having a great quantity is required in order to hold the detection data.

US 2011/0228839 A1 shows a channel equalizer that compensates for signal distortion. A received signal is oversampled and input to an equalization control circuit which controls the gain of an equalization filter. The gain control signal is generated based on a width of an isolated bit.

US 2010/0142606 A1 shows a transmission line compensation circuit that compensates for the transmission loss of high and/or low frequency components. The circuit comprises a high-pass filter to extract high frequency components, a peak detector to compare the peak of the high-pass filter output to two reference voltages, and a control circuit that controls the intensity of the linear equalizer based on the detection results of the peak detector. In another embodiment, a lowpass filter, a peak detector, a gain control circuit are additionally provided to control the gain of a variable gain amplifier.

### SUMMARY OF THE INVENTION

Accordingly, embodiments of the present invention are provided in consideration of the above problem and provide a novel and useful sending and receiving system enabling an automatic adjustment of an equalizer amount with a simple structure.

Additional objects and advantages of the embodiments will be set forth in part in the description which follows, and in part will be clear from the description, or may be learned by practice of the invention. Objects and advantages of the invention will be realized and attained by means of the elements and combinations particularly pointed out in the appended claims.

It is to be understood that both the foregoing general description and the following detailed description are exemplary and explanatory only and are not restrictive of the invention as claimed.

### BRIEF DESCRIPTION OF THE DRAWINGS

FIG. 1 is a functional block diagram of a sending and receiving system of a first embodiment of the present invention;
FIG. 2 is a flow chart illustrating a process of the sending and receiving system of the first embodiment of the present invention;
FIG. 3 illustrates an exemplary structure of a receiving unit of the first embodiment of the present invention;
FIG. 4 illustrates an exemplary structure of a variable resistor of the receiving unit of the first embodiment of the present invention;
FIG. 5 illustrates an exemplary structure of a separating unit of the first embodiment of the present invention;
FIG. 6 illustrates an exemplary structure of a VCO of the separating unit of the first embodiment of the present invention;
FIG. 7 illustrates an exemplary structure of a OVS part of the separating unit of the first embodiment of the present invention;
FIG. 8 illustrates a signal processed by the receiving unit and the separating unit;
FIG. 9 illustrates a signal processed by the receiving unit and the separating unit in a case where the signal is degraded;
FIG. 10 illustrates a signal processed by the receiving unit and the separating unit in a case where the signal is properly compensated;
FIG. 11 illustrates a flow chart of a control unit of the first embodiment of the present invention;
FIG. 12 is a functional block of a sending and receiving system of a second embodiment of the present invention;
FIG. 13 is a flow chart illustrating a process of the sending and receiving system of the second embodiment of the present invention;
FIG. 14 is a functional block of a sending and receiving system of a third embodiment of the present invention;
FIG. 15 is a flow chart illustrating a process of the sending and receiving system of the third embodiment of the present invention; and
FIG. 16 is a functional block of a sending and receiving system of a fourth embodiment of the present invention.

### DETAILED DESCRIPTION OF THE PREFERRED EMBODIMENTS

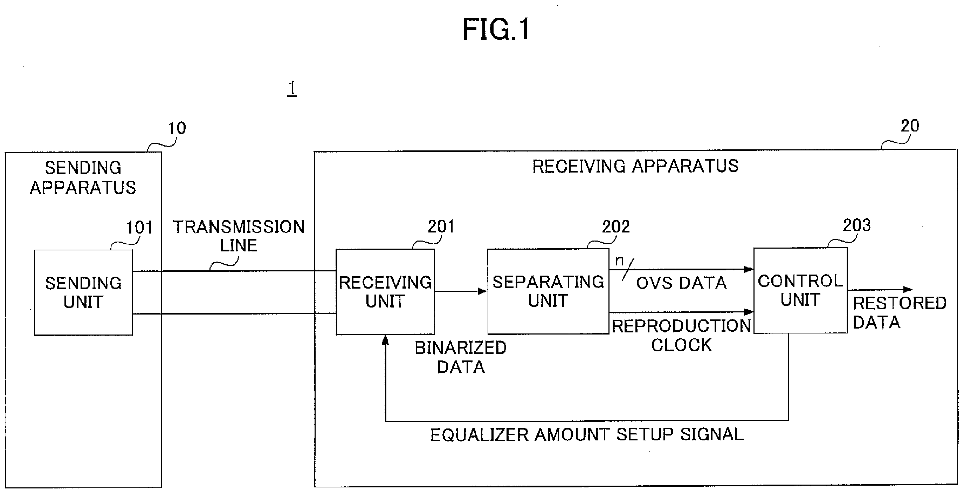

A description is given below, with reference to the FIG. 1 through FIG. 16, of embodiments of the present invention. Where the same reference symbols are attached to the same parts, repeated description of the parts is omitted.

Reference symbols typically designate as follows:
1, 1A, 1B, 1C: sending and receiving system;
10, 10A, 10B, 10C: sending apparatus;
20, 20A, 20B, 20C: receiving apparatus;
101: sending unit;
102, 102B: sending control unit;
112: stressing unit;
201: receiving unit;
211: equalizer;
212: binarizing unit;
213: variable resistor;
202: separating unit;
221: phase comparator;
222: charging pump;
223: filter;
224: VCO;
225: OVS part; and
203, 203A, 203B: control unit.

### [First Embodiment]

FIG. 1 is a functional block diagram of a sending and receiving system 1 of a first embodiment of the present invention. The sending and receiving system 1 includes a sending apparatus 10 and a receiving apparatus 20 performing a serial communication. The sending apparatus 10 is substantialized by a sending circuit included in, for example, a device on a sending side, and the receiving apparatus 20 is substantialized by a receiving circuit included in, for example, a device on a receiving side. The sending apparatus 10 and the receiving apparatus 20 are connected by a transmission line.

The sending apparatus 10 includes a sending unit 101. The sending unit 101 is substantialized by a transceiver, which can send a differential signal, and sends a high-speed serial signal to the receiving apparatus 20 through the transmission line.

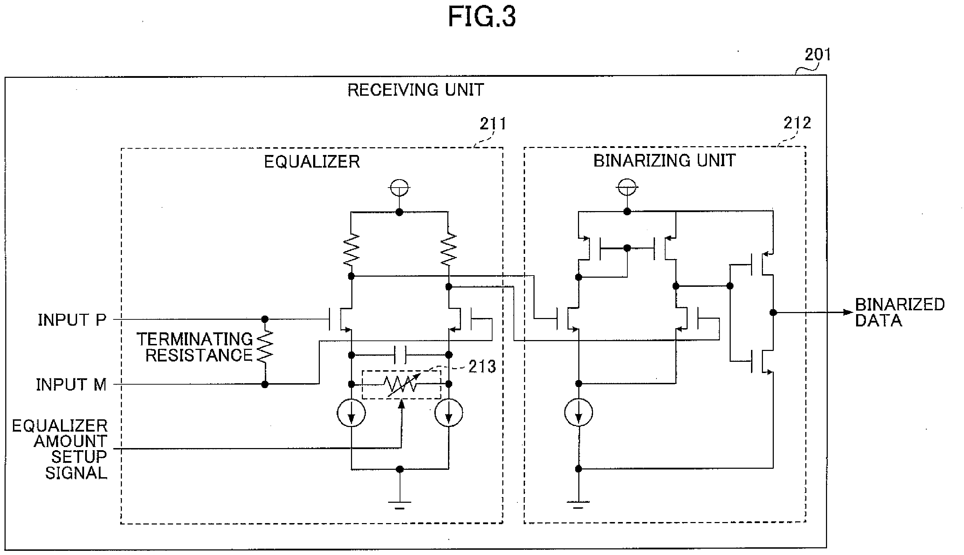

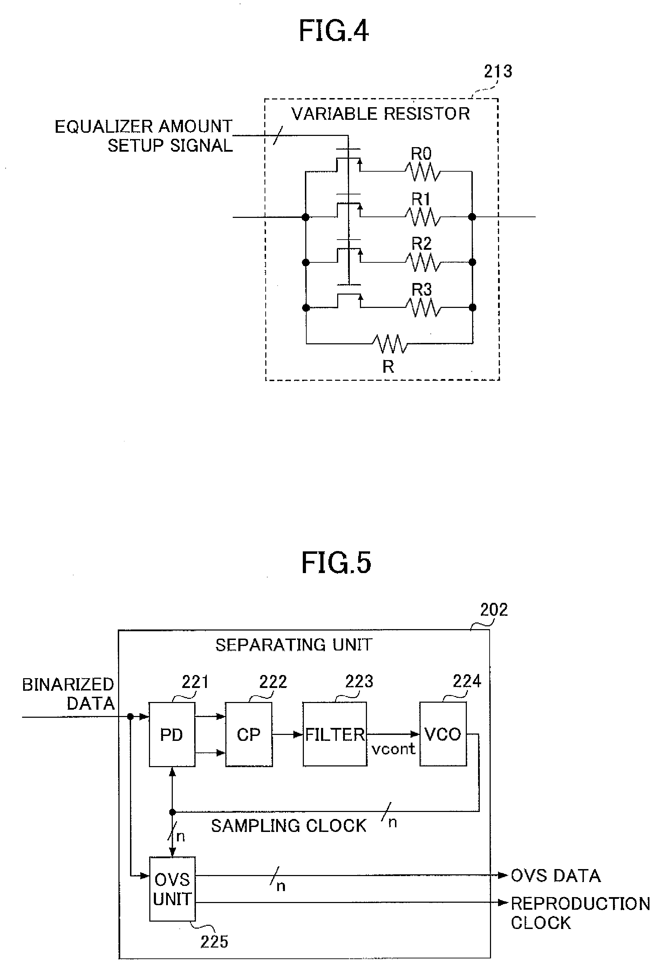

The receiving apparatus 20 includes a receiving unit 201, a separating unit 202, and a control unit 203. The receiving unit 201 is substantialized by a receiver which can receive the differential signal and receives the differential signal received from the sending apparatus 10. The receiving unit 201 receives an equalizer amount setup signal indicative of a setup value of the equalizer amount input from the control unit 203. The receiving unit 201 compensates the differential signal depending on the equalizer amount setup signal (performs an equalizing process) and outputs binarized data to a separating unit 20 (described below) . Referring to FIGs. 3 and 4, the receiving unit 201 is described in detail later.

The separating unit 202 is substantialized by a clock data recovery (CDR) circuit, and separates a reproduction clock from binarized data received from the receiving unit 201. Further, the separating unit 202 performs oversampling using a sampling clock whose frequency is n times of the data rate. As such, the data acquired by oversampling are called oversampling (OVS) data. Further, the separating unit 202 outputs the OVS data of n bits and the reproduction clock to the control unit 203 (described below). Referring to FIGs. 5 to 7, the separating unit 202 is described in detail later.

The control unit 203 is substantialized by a CPU, restores data by the OVS data received from the separating unit 202 and the reproduction clock, and outputs the restored data. The control unit 203 transfers the equalizer amount setup signal to the receiving unit 201 (described in detail later) .

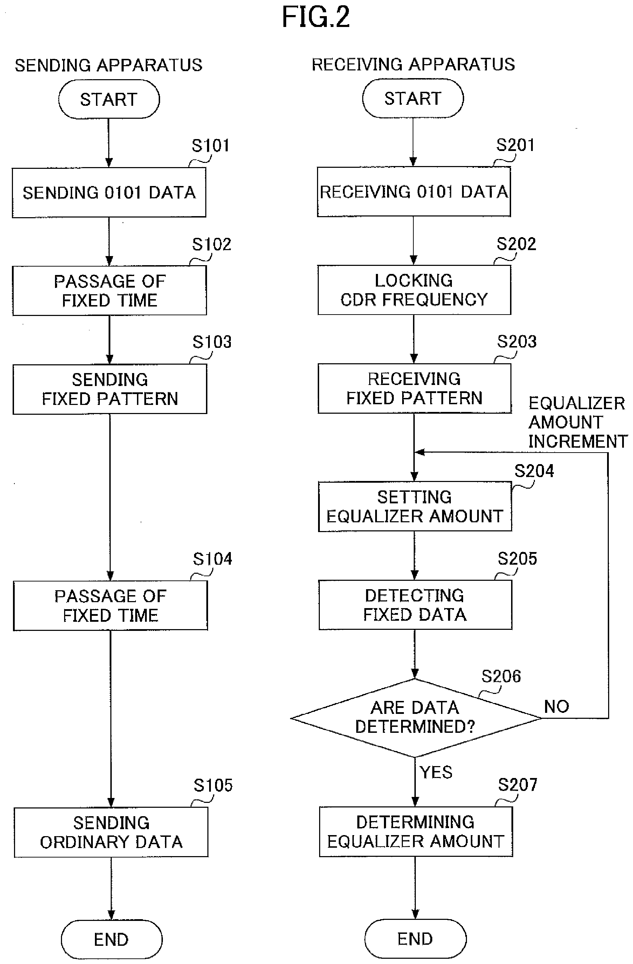

FIG. 2 is a flow chart illustrating a process of adjusting the equalizer amount in the sending and receiving system 1 of the first embodiment of the present invention. FIG. 2 individually illustrates processes performed by the sending apparatus 10 and the receiving apparatus 20. The explanation is given along the flow chart.

First, the sending apparatus 10 sends data in which "0101" are arranged in this order in step S101. These data are a data signal used by the separating unit 202 of the receiving apparatus 20 to lock the frequency.

Next, the sending apparatus 10 starts data transmission of the fixed pattern (step S103) after the fixed time passes (step S103). The fixed time is set based on a frequency lock time which is assumed from characteristics of the separating unit 20 of the receiving apparatus 20. Said differently, the sending apparatus 10 starts data transmission of the data of the fixed pattern at a time after the receiving apparatus 20 is determined to lock the frequency.

The data transmission of the fixed pattern means repeated sending of data of 40 bits such as "0011111010_1010101010_1100000101_0101010101". It is desirable that the fixed pattern contains data (hereinafter, expressed by "5T1T") where data "0" or "1" (hereinafter, expressed by "1T") are added after 5 consecutive data "1" or "0" (hereinafter, expressed by "5T"). The number of the consecutive data may not be 5 and can be a predetermined number.

The data having the pattern such as "5T" is a signal having a low (slow) frequency, and the data having the pattern such as "1T" is a signal having a high (fast) frequency. Accordingly, if these data pass through the transmission line, the data having the pattern "1T" attenuates more than the data having the pattern of "5T". By using these characteristics, the data of the fixed pattern sent by the sending apparatus 10 of the first embodiment are formed so as to contain the pattern of "5T1T" where an influence of the transmission line on the data of the fixed pattern is conspicuously observed and an effect of the equalizer can be easily measured.

The sending apparatus 10 starts ordinary data transmission (step S105) after a fixed time passes (step S104) after starting to send the data of the fixed pattern. The fixed time is set in response to a time, which is previously estimated by the receiving apparatus and is necessary for adjusting the equalizer amount.

Meanwhile, when the data of consecutive "0101" are received, the receiving apparatus 20 causes the separating unit 202 to start an operation of the separating unit 202 in step S201. The separating unit 202 generates a clock (a reproduction clock) where the frequency and the phase are locked using the received data in step S202. The time during a transient state until the frequency and the phase of the reproduction clock are locked is determined by characteristics such as a loop band of the separating unit 202 or the like.

The receiving apparatus 20 receives the data of the fixed pattern in step S203 after the fixed time set based on the frequency lock time of the separating unit 202 passes. The receiving apparatus 20 is in a period of setting the equalizer amount after receiving the fixed pattern.

The equalizer amount setup signal for setting the equalizer amount is data of, for example, 4 bits. At first, the equalizer amount setup signal "0000" is set. At this time, the equalizer amount (a difference of gain between the high frequency side (the signal of "1T") and the low frequency side (the signal of "5T")) is minimized. As the equalizer amount setup signal is incremented, the equalizer amount is increased. After the equalizer amount setup signal is set up, the fixed data are detected in step S205.

Here, the fixed data are described. The separating unit 202 generates OVS data by oversampling binarized data using a sampling clock having a frequency n times greater than the data rate. Provided that n=4, in a case where the binarized data of, for example, "0101" are input, the generated OVS data are sequentially "0000", "1111", "0000", and "1111" (hereinafter, "0000_1111_0000_1111").

The OVS data generated corresponding to the above pattern of "5T1T" are ideally "1111_1111_1111_1111_1111_0000". However, the signal attenuated by the frequency characteristics of the transmission line is, for example, "1111_1111_1111_1111_1111_1100" or "1111_1111_1111_1111_1111_1110".
In a case where the signal is further attenuated, the data corresponding to the pattern "1T" may disappear.

In this case, in order to avoid a communication error, it is necessary to compensate using the equalizer. When a proper equalizer amount is set, the OVS data become "1111_1111_1111_1111__1111_0000" or "1111_1111_1111_1111_1111_1000".
In the frequency, attenuation of the width of pulse "1T" is greatest in the patterns of "5T1T" ("5T" is provisionally longest, and the length is not limited to "5T") having the greatest difference. Therefore, the control unit 203 of the receiving apparatus 20 detects the width of pulse (the bit length) of the pattern "1T" and determines whether the equalizer amount is proper.

As to the fixed data, the fixed data designates the OVS data corresponding to the pattern of the above "5T". In the above example, the fixed data are 20 consecutive data of "1", namely "1111_1111_1111_1111_1111".
In the above case of, for example, 40 bits data "0011111010_1010101010 1100000101_0101010101", the control unit 203 detects the fixed data of "1111_1111_1111_1111_1111". Then, it is known that the next data is "0", the width of pulse of the data "0" is measured.

Here, the number of the consecutive "1" of the OVS data is not necessarily 20 and may be 19, 21, or 22. Therefore, the control unit 203 is required to be set so as to detect the fixed data by assuming these cases. Further, the control unit 203 is required to be formed so as to be able to deal with a case where a pulse of data "0" disappears.

As described, the width of pulse of "1T" after the data of the pattern of "5T" is measured and it is determined that the width of pulse is a proper value (YES of step S206). Then, the equalizer amount is determined and the setup is completed in step S207. For example, in the above example, if the width of pulse as the OVS data is equal to or greater than a predetermined bit number (for example, 3 bits or 4 bits), the data are determined to be proper. In a case where the width of pulse as the OVS data is smaller than the predetermined bit number (for example, 0, 1, or 2 bits) (NO of step S206), the equalizer amount setup signal is incremented to perform a setup of the equalizer amount again in steps S204 to S206.

If the width of pulse does not become proper even if the equalizer amount setup signal is maximized to be, for example "1111", the equalizer amount setup signal is set to have the maximum value and the process may be ended.

FIG. 3 illustrates an exemplary circuit structure of the receiving unit 201 of the receiving apparatus 20 of the first embodiment. The receiving unit 201 includes an equalizer 211 and a binarizing unit 212.

When a differential signal (an input P and an input M) is input, the equalizer 211 sets the equalizer amount depending on the equalizer amount setup signal and outputs the compensated differential signal to the binarizing unit 212.

The binarizing unit 212 outputs the input differential signal as binarized data.

A terminating resistance is arranged between the inputs P and M. This terminating resistance is generally set to have the same value as that of an output resistance of a circuit forming the sending apparatus 10 or that of a characteristic impedance of the transmission line.

Further, the equalizer amount setup signal is input into the variable resistor 213 and adjusts a resistance value. By changing the resistance value of the variable resistor, the equalizer amount changes. In a case of a high frequency signal, an electric current flows through the resistors connected in parallel to thereby increase the gain. On the contrary, in a case of a low frequency signal, the gain is limited by the variable resistor 213.

As such, the high frequency signal is stressed by the equalizer 211 and the low frequency signal is attenuated. With this, the attenuation of the high frequency signal is compensated by the frequency characteristics of the transmission line. Further, the binarizing unit 212 determines high or low of the signal using a predetermined threshold value and outputs a signal similar to a square wave as the binarized data.

FIG. 4 illustrates an exemplary structure of the variable resistor 213 illustrated in FIG. 3. The variable resistor 213 includes a resistor R, resistors R0, R1, R2, and R3 arranged in parallel to the resistor R, and Pch transistors (PchTr) which function as a switch for the resistors R0, R1, R2, and R3, respectively. The PchTr is turned on when the gate voltage is 0 so as to be connected. Therefore, in a case where the equalizer amount setup signal is "0000", all switches are turned on thereby minimizing the resistance value of the variable resistor 213. In a case where the resistance value of the variable resistor 213 is small, the equalizer amount of the equalizer 211 is minimized.

On the other hand, in a case where the equalizer amount setup signal is "1111", all the switches are turned off thereby maximizing the resistance value of the variable resistor 213 so as to be R. In a case where the resistance value of the variable resistor 213 is great, the equalizer amount of the equalizer 211 illustrated in FIG. 3 is maximized.

FIG. 5 illustrates an exemplary circuit structure of the separating unit 202 of the receiving apparatus 20 of the first embodiment of the present invention. The separating unit 202 includes a phase comparator (PD) 221, a charging pump (CP) 222, a filter 223, a voltage controlled oscillator (VCO) 224, and an oversampling (OVS) part 225. A loop including the PD 221, the CP 221, the filter 223 and the VCO 224 forms an ordinary phase locked loop (PLL) circuit.

Here, the VCO 224 outputs a sampling clock of an n phase to divide the phase of the oscillating frequency of the VCO 224 equally into n.
For example, if the oscillating frequency of the VCO 224 is 2 Hz and n=4, the phase difference of each sampling clock is: (1/2 GHz) / 4 phases = 125 [ps].
All the sampling clocks of the 4 phases are input into the OVS part 225. One of the sampling clocks is input into the PD 221 (However, depending on the structure of the PD 221, two of the sampling clocks can be input) . Here, because the PD 221, the CP 222, and the filter 223 can be circuits used in an ordinary PLL, description thereof is omitted.

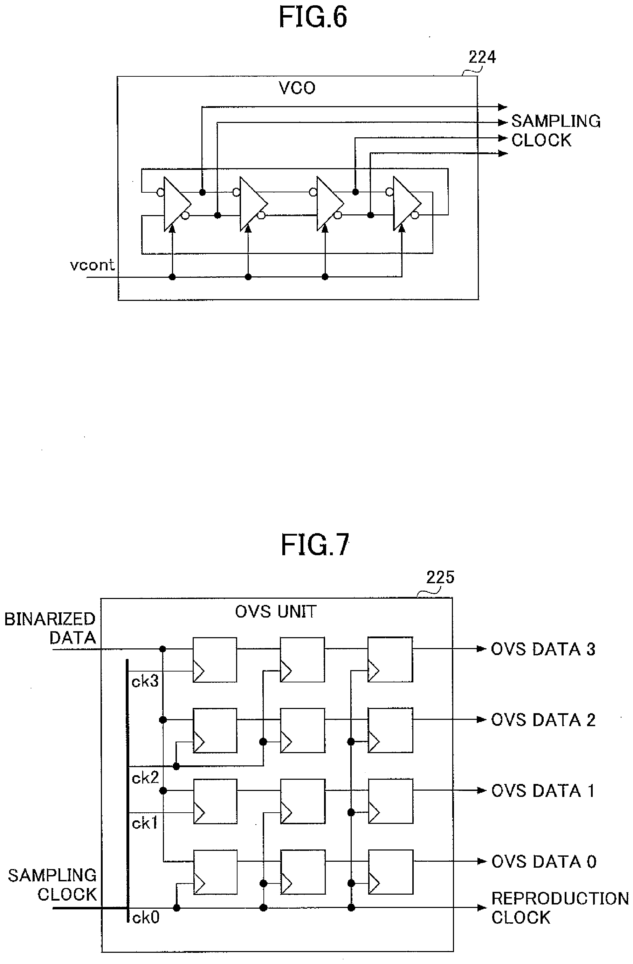

FIG. 6 illustrates an exemplary structure of the voltage controlled oscillator (VCO) 224 illustrated in FIG. 5. The VCO 224 is a ring-type oscillator which is formed by connecting four differential buffers in a shape of a ring. The signal vcont is input into the four differential buffers. The delay time is determined based on the value of vcont. Therefore, the VCO 224 is a voltage-controlled oscillator where the oscillating frequency is determined by vcont. The VCO 224 outputs sampling clocks having mutually different phases each shifted by 90 degrees from four nodes included in eight nodes of the four rings.

FIG. 7 illustrates an exemplary structure of the OVS part 225 illustrated in FIG. 5. The OVS part 225 receives binarized data and sampling clocks of the four phases as an input and outputs the reproduction clock and the OVS data of four bits. The OVS part 225 firstly samples the binarized data using the sampling clocks of the four phases (ck0, ckl, ck2, and ck3), and then outputs the OVS data in synchronism with the sampling clock ck0.

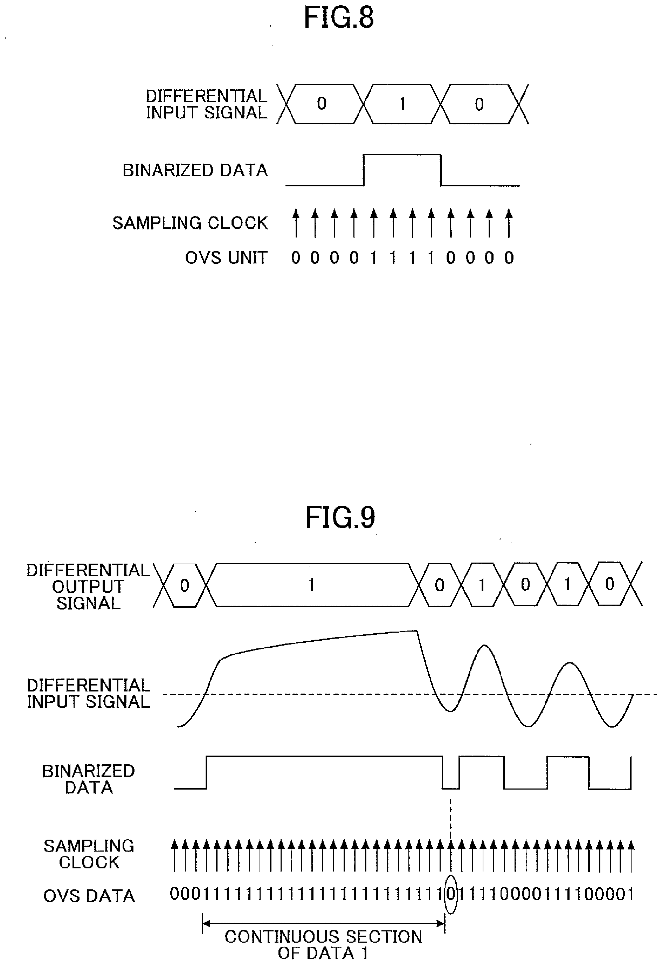

Referring to FIG. 8, operations of the receiving unit 201 and the separating unit 202 are described. The differential input signal illustrated in FIG. 8 is input in the receiving unit 201 and is an ideal signal of a pattern "010" without attenuation caused in the transmission line. The receiving unit 201 binarizes this signal and produces the binarized data illustrated in FIG. 8. The separating unit 202 oversamples the binarized data and outputs the OVS data "0000_1111_0000".

However, the signal is degraded by the frequency characteristics of the transmission line. Referring to FIG. 9, the waveform of this degraded signal is described.

The differential output signal illustrated in FIG. 9 is an ideal signal of "01111101010" immediately after being output from the sending apparatus 10. This signal is degraded by passing through the transmission line.

The differential input signal illustrated in FIG. 9 illustrates a waveform after the equalizer process is performed by the receiving unit 201. However, the equalizer amount is small and insufficient. Because a part where the data is "1" (corresponding to the pattern of "5T") in the differential input signal has a low frequency, the amplitude is great. Meanwhile, because the part of the pattern "1T" has a high frequency, the attenuation is great and the amplitude is small.

When data of the pattern "1T" immediately after the pattern of "5T" are focused, because the amplitude of the data of "5T" is great, a time for the data of "1T" exceeding the threshold for the binarization delays. As a result, the width of pulse of the data of "1T" becomes small. Referring to FIG. 9, it is ideal that the four data "0" having the four pulse (widths) are output as the OVS data corresponding to the pattern "1T". However, only one data "0" is output in FIG. 9.

The control unit 203 of the receiving apparatus 20 produces the restored data from the OVS data. However, if the state illustrated in FIG. 9 especially occurs, it is difficult to accurately produce the restored data (a communication error may occur). In the receiving apparatus 20 of the first embodiment of the present invention, the width of pulse becomes ideal and the communication error can be restricted by setting and applying a proper equalizer amount.

Referring to FIG. 9, a part illustrated as a "continuous section of data 1" corresponds to the fixed data in detecting the fixed data in step S205 of FIG. 2. The control unit 203 detects the fixed data and measures the width of pulse of the next data to determine whether the equalizer amount is proper.

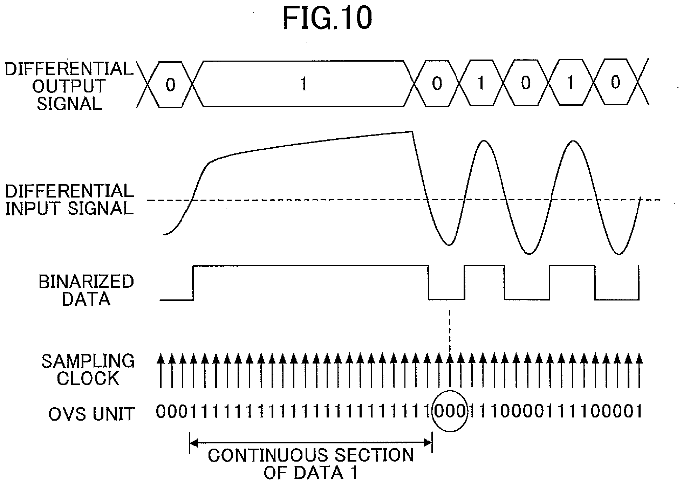

FIG. 10 illustrates a signal waveform in a case where the proper equalizer amount is set. The differential output signal is the same data as that of FIG. 9. The differential input signal shows the waveform after the equalizer process is performed by the receiving unit 201. By properly applying the equalizer, the amplitude of the waveform corresponding to the pattern "1T" is great and the width of pulse of the pattern "1T" immediately after the pattern of "5T" has a proper value (three pulses (widths)). The control unit 203 determines the equalizer amount causing this state and ends the process.

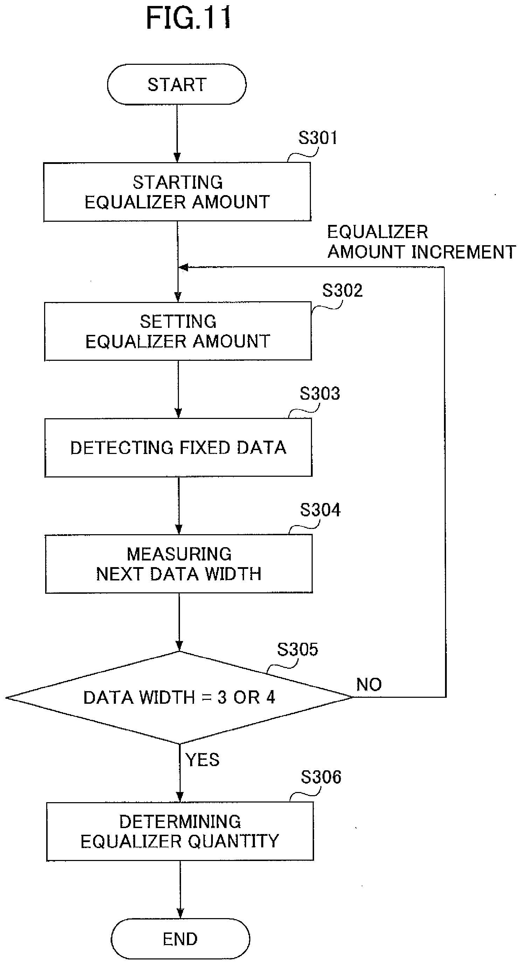

FIG. 11 is a flowchart illustrating a process performed by the receiving apparatus of the control unit 203. For example, a digital logic circuit may constitute the control unit 203.

At first, the control unit 203 sets the equalizer amount (step S302) after a process of adjusting the equalizer amount is set up in step S301. The equalizer amount setup signal for setting the equalizer amount is data of, for example, 4 bits. The control unit 203 firstly sets up the equalizer amount setup signal 0000". At this time, the equalizer amount (a difference of gain between the high frequency side (the signal of "1T") and the low frequency side (the signal of "5T")) is minimized. As the equalizer amount setup signal is incremented, the equalizer amount is increased.

The control unit 203 detects the fixed data in step S303 after setting the equalizer amount setup signal. As described above, in a case where the pattern of the received data is like "5T1T", the fixed data correspond to the pattern of "5T". In a case where n=4, the fixed data are "1111_1111_1111_1111_1111". However, twenty data "1" do not always continue and the number of the data may be nineteen, twenty one, twenty two, or the like. Therefore, it is necessary for the control unit 203 to be able to deal with these fixed data.

When the control unit 203 detects the fixed data, the control unit measures the data width of subsequent data in step S304. The subsequent data is the data of the pattern "1T" after the pattern of "5T". The number of "0" after the data of continuous "1" in the received OVS data corresponds to the width of pulse of the data of the pattern "1T".

In a case where the width of pulses of the data of the pattern "1T" is equal to or greater than a predetermined number (e.g., 3 or 4 in n=4), it is possible to determine that a proper equalizer amount can be set in YES of step S305. Therefore, the control unit 203 determines this equalizer amount as the proper equalizer amount in step S306.

On the other hand, in a case where the width of pulse is 1 or 2, the control unit 203 determines that the equalizer amount is insufficient in NO of step S305. Then, the control unit 203 increments the equalizer amount setup signal by one and repeats the process of steps S302 and S305.

Further, there is a possibility that the width of pulse of the data of the pattern of "1T" is zero. Therefore, in a case where the number of the continuous data "1" is equal to or greater than 24, it is determined that the data of the pattern "1T" disappear and the control unit may increment the equalizer amount setup signal by one and may perform the process of steps S302 to S305.

Although it is not illustrated in FIG. 11, the control unit 203 produces a proper bit included in the input OVS data as the restored data.

As described, by using the receiving apparatus 20 of the first embodiment of the present invention, a high speed ADC or a memory for retaining the detected data becomes unnecessary. Further, it is possible to automatically adjust the equalizer amount with a simple structure.

### [Second Embodiment]

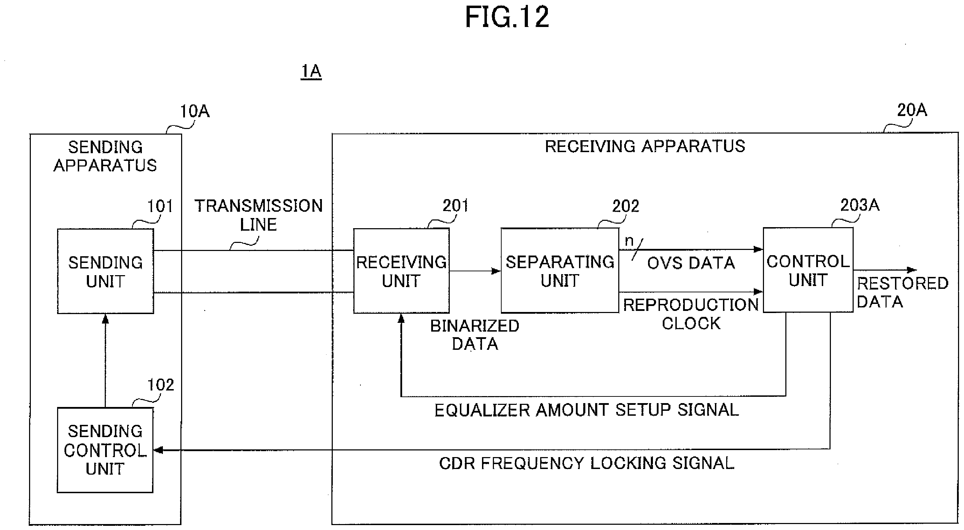

FIG. 12 is a functional block diagram of a sending and receiving system 1A of a second embodiment of the present invention. Unlike the sending and receiving system 1 illustrated in FIG. 1, a sending control unit 102 is added to a sending apparatus 10A. Further, binarized data are input into the control unit 203A of the receiving apparatus 20A, and a frequency lock signal is output from the control unit 203A.

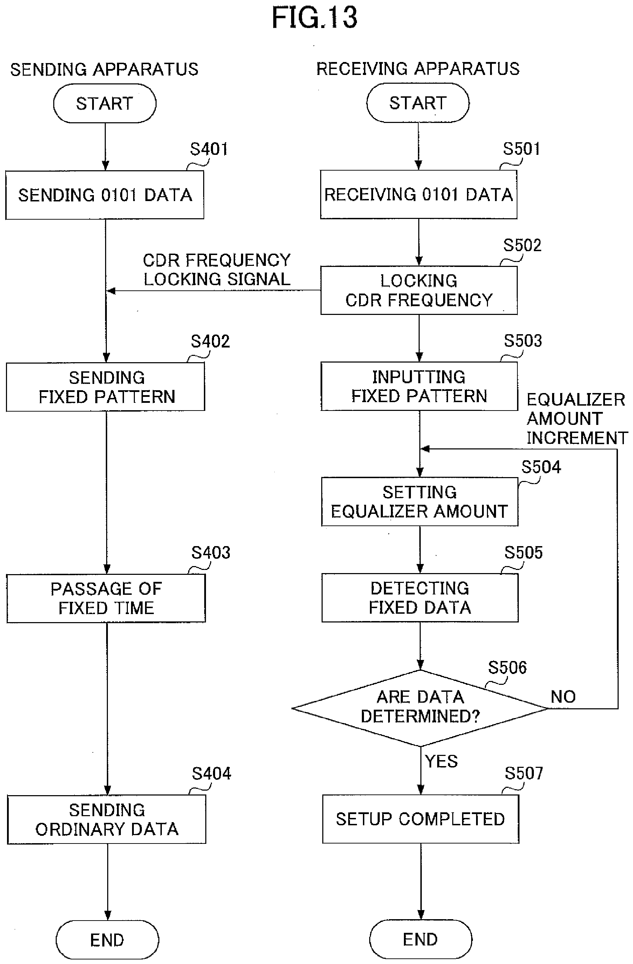

FIG. 13 is a flow chart illustrating a process of adjusting the equalizer amount by the sending apparatus 10A and the receiving apparatus 20A of the sending and receiving system 1A of the second embodiment. The flowchart illustrated in FIG. 13 corresponds to the flowchart of the first embodiment illustrated in FIG. 2.

In the flowchart illustrated in FIG. 13, step S102 "passage of fixed time" in FIG. 2 is deleted. The control unit 203A of the receiving apparatus 20A observes the binarized data and the frequency of the reproduction clock. If it is determined that the frequency is locked, the frequency lock signal is sent to the sending control unit 102 of the sending apparatus 10A in step S502.

The sending control unit 102 of the sending apparatus 10A starts to send a fixed pattern signal in step S402 after receiving the frequency lock signal. With this, even if step S401 "sending 0101 data" is not continued for the fixed time, it is possible to detect a lock of the frequency and the transmission can be switched to the fixed pattern transmission. Therefore, the process time can be shortened.

The control unit 203A of the receiving apparatus 20A detects that the frequency of the binarized data matches the frequency of the reproduction clock. This can be achieved by measuring the clocks using a counter for a predetermined period and observing a difference of the count values for a predetermined period. Although it is not illustrated in FIG. 12, the receiving apparatus 20A may include a 2 frequency divider or the like to make a relationship between the frequency of the binarized data and the frequency of the reproduction clock become double or half.

### [Third Embodiment]

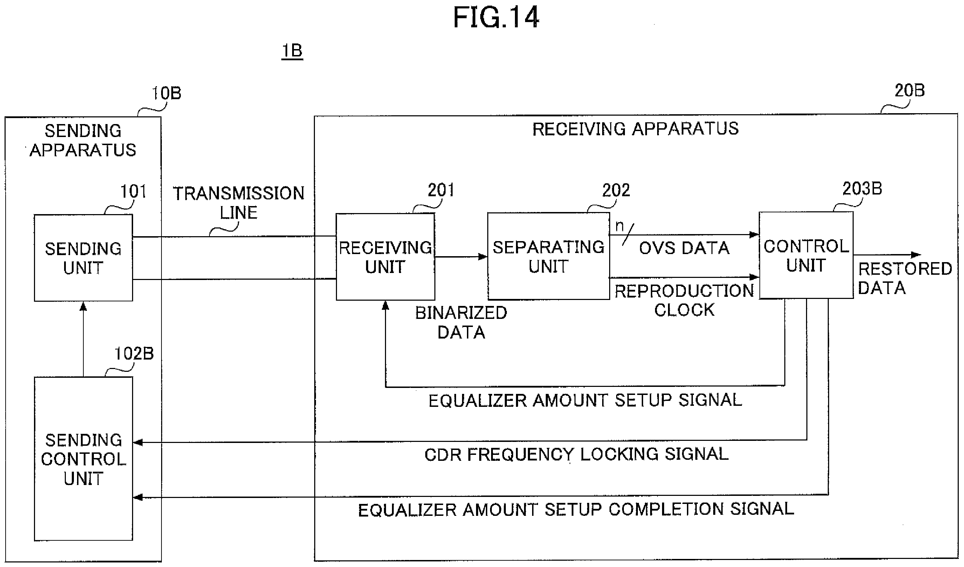

FIG. 14 is a functional block diagram of a sending and receiving system 1B of a third embodiment of the present invention. Unlike the sending and receiving system 1A illustrated in FIG. 12, in the sending and receiving system 1B, an equalizer amount setup completion signal is output from a control unit 203B of a receiving apparatus 20B to a sending control unit 102B of a sending apparatus 10B. The control unit 203B of the receiving apparatus 20B outputs the equalizer amount setup completion signal to the sending control unit 102B when the equalizer amount is determined.

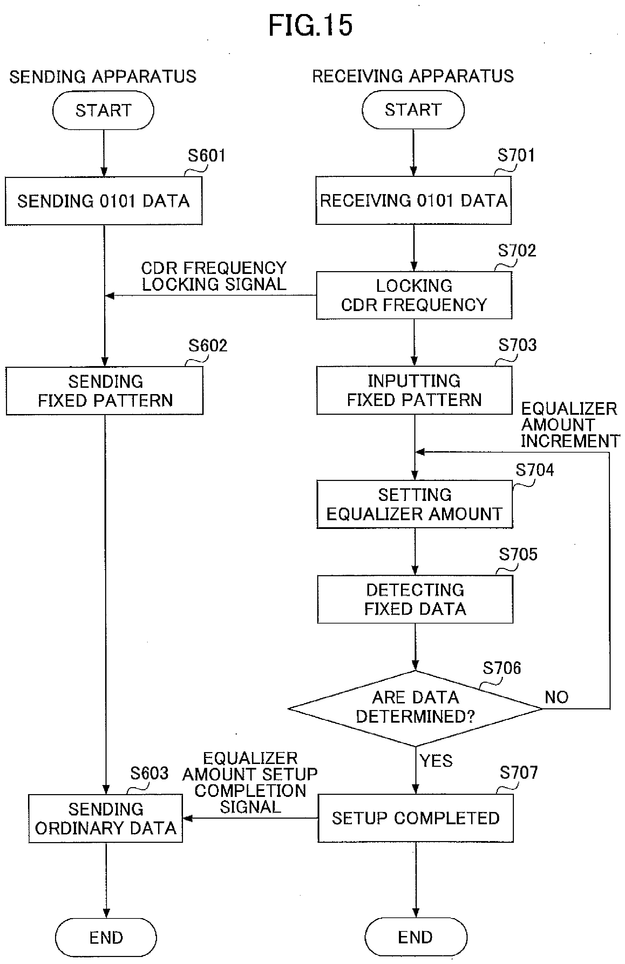

FIG. 15 is a flow chart illustrating a process of adjusting the equalizer amount by the sending apparatus 10B and the receiving apparatus 20B of the sending and receiving system 1B of the third embodiment. The flowchart illustrated in FIG. 15 corresponds to the flowchart of the second embodiment illustrated in FIG. 13.

In the flowchart illustrated in FIG. 15, step S403 "passage of fixed time" in FIG. 13 is deleted. In step S707, the control unit 203B of the receiving apparatus 20B sends the equalizer amount setup completion signal to the sending control unit 102B of the sending apparatus 10B when the equalizer amount is determined in steps S704 to S706.

The sending control unit 102B of the sending apparatus 10B starts to send ordinary data upon receipt of the equalizer amount setup completion signal in step S603. With this, the sending apparatus 10B can be switched to ordinary data transmission without waiting the passage of a fixed time during the fixed pattern is sent. Therefore, the process time can be shortened.

### [Fourth Embodiment]

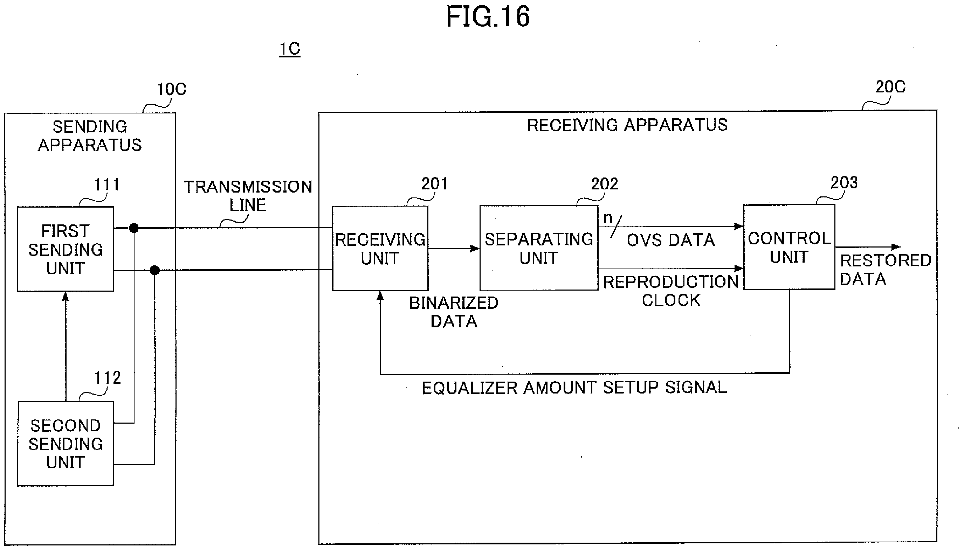

FIG. 16 is a functional block diagram of a sending and receiving system 1C of a fourth embodiment of the present invention. Unlike the sending and receiving system 1, the sending apparatus 10C includes a sending unit (first sending unit) 111 and a stressing unit (second sending unit) 112 for stressing a signal sent by the sending unit (first sending unit) 111. The stressing unit (second sending unit) 112 is substantialized by a transceiver for emphasis and stresses a differential output signal output from the sending unit (first sending unit) 111. With this structure, it is possible to compensate signal attenuation caused in the transmission line by using not only an equalizer of the receiving apparatus 20C but also an emphasis process performed by the sending apparatus 10C.

By arbitrarily combining the sending apparatus and the receiving apparatus of the above embodiments, the sending and receiving system can be structured.

With the sending and receiving system of the embodiments, the equalizer amount can be automatically adjusted with a simple structure.

All examples and conditional language recited herein are intended for pedagogical purposes to aid the reader in understanding the principles of the invention and the concepts contributed by the inventor to furthering the art, and are to be construed as being without limitation to such specifically recited examples and conditions, nor does the organization of such examples in the specification relate to a showing of the superiority or inferiority of the invention. Although a sending and receiving system has been described in detail, it should be understood that various changes, substitutions, and alterations could be made thereto without departing from the scope of the invention.

## Claims

1. A sending and receiving system (1, 1A to 1C) comprising:
a sending apparatus (10; 10A to 10C) configured to perform a serial communication and includes
a sending unit (101) configured to send a signal having a predetermined pattern formed by adding a single 1 after a predetermined number of consecutive 0 or by adding a single 0 after a predetermined number of consecutive 1; and
a receiving apparatus (20; 20A to 20C) configured to perform the serial communication and includes
a receiving unit (201) configured to provide the signal sent from the sending unit (101) with an equalizing process depending on a setup value of an equalizer amount,
a sampling unit (225) configured to sample data obtained in the equalizing process by the receiving unit (201) at a data rate higher than a data rate of the data, and
a control unit (203) configured to control the setup value of the equalizer amount based on a change of the data corresponding to the predetermined pattern;
**characterized in that**:
the control unit (203) is configured to determine that the setup value of the equalizer amount is proper in a case where a bit length of a data part corresponding to the added single 0 or the added single 1 is equal to or more than a predetermined length, the receiving unit (201) includes an equalizer (211) configured to set the equalizer amount depending on the equalizer amount setup value received from the control unit (203), wherein the equalizer (211) comprises a variable resistor (213) configured to receive the equalizer amount setup value to adjust a resistance value of the resistor (213),
wherein in case of a high frequency signal, a gain is increased, and in case of a low frequency signal, the gain is limited by the variable resistor (213).

2. The sending and receiving system (1; 1A to 1C) according to claim 1, wherein the control unit (203) is configured to send a frequency lock signal to the sending apparatus (10; 10A to 10C) in a case where a frequency of the data matches a frequency of a reproduction clock which is separated from the data, and
wherein the sending apparatus (10; 10A to 10C) is configured to send the signal having the predetermined pattern in response to a receipt of the frequency lock signal sent from the control unit (203).

3. The sending and receiving system (1; 1A to 1C) according to claim 1,
wherein the control unit (203) is configured to send a setup completion signal to the sending apparatus (10; 10A to 10C) in a case where the control unit (203) determines that the setup value of the equalizer amount is proper, and
wherein the sending apparatus (10; 10A to 10C) is configured to start to send ordinary data in response to a receipt of the setup completion signal sent from the control unit (203) .

4. The sending and receiving system (1; 1A to 1C) according to any one of claims 1 to 3, further comprising:
a stressing unit (112) configured to compensate signal attenuation caused in the transmission line.

5. The sending and receiving system (1; 1A to 1C) according to any one of claims 1 to 4, wherein the variable resistor (213) includes a resistor (R), resistors (R0 to R3) arranged in parallel to the resistor (R) and transistors (PchTr) which function as a switch for the resistors (R0 to R3), respectively.

6. A method of sending and receiving a signal performed in a sending and receiving system (1; 1A to 1C) that includes a sending apparatus (10; 10A to 10C) having a sending unit (101) for performing a serial communication and a receiving apparatus (20; 20A to 20C) having a receiving unit (201) for performing the serial communication, the method comprising:
sending, by the sending apparatus (10; 10A to 10C), a signal having a predetermined pattern formed by adding a single 1 after a predetermined number of consecutive 0 or by adding a single 0 after a predetermined number of consecutive 1; and
receiving, by the receiving apparatus (20; 20A to 20C), the signal and providing the signal sent from the sending unit (101) with an equalizing process depending on a setup value of an equalizer amount;
sampling data obtained in the equalizing process at a data rate higher than a data rate of the data; and
controlling the setup value of the equalizer amount of an equalizer provided in the receiving unit (201), based on a change of the data corresponding to the predetermined pattern;
**characterized by** determining that the setup value of the equalizer amount is proper in a case where a bit length of a data part corresponding to the added single 0 or the added single 1 is equal to or more than a predetermined length, setting the equalizer amount depending on an equalizer amount setup value received in the step of controlling;
wherein a variable resistor (213) which is provided in the equalizer (211) receives the equalizer amount setup value to adjust a resistance value of the variable resistor (213),
wherein in case of a high frequency signal, a gain is increased, and in case of a low frequency signal, the gain is limited by the variable resistor (213).

7. A receiving apparatus (20; 20A to 20C) having means for performing a serial communication with a sending apparatus (10; 10A to 10C) having a sending unit (101), the receiving apparatus (20; 20A to 20) comprising:
a receiving unit (201) configured to provide a signal, which has a predetermined pattern formed by adding a single 1 after a predetermined number of consecutive 0 or by adding a single 0 after a predetermined number of consecutive 1 and is sent from the sending unit (101), with an equalizing process depending on a setup value of an equalizer amount,
a sampling unit (225) configured to sample data obtained in the equalizing process by the receiving unit (201) at a data rate higher than a data rate of the data, and
a control unit (203) configured to control the setup value of the equalizer amount based on a change of the data corresponding to the predetermined pattern;
**characterized in that**:
the control unit (203) is configured to determine that the setup value of the equalizer amount is proper in a case where a bit length of a data part corresponding to the added single 0 or the added single 1 is equal to or more than a predetermined length, the receiving unit (201) includes an equalizer (211) configured to set the equalizer amount depending on the equalizer amount setup value received from the control unit (203), wherein the equalizer (211) comprises a variable resistor (213) configured to receive the equalizer amount setup value to adjust a resistance value of the resistor (213),
wherein in case of a high frequency signal, a gain is increased, and in case of a low frequency signal, the gain is limited by the variable resistor (213).

## Patentansprüche

1. Sende- und Empfangssystem (1, 1A bis 1C), umfassend:
eine Sendevorrichtung (10; 10A bis 10C), die konfiguriert ist, um eine serielle Kommunikation auszuführen und Folgendes enthält
eine Sendeeinheit (101), die konfiguriert ist, um ein Signal mit einem vorbestimmten Muster zu senden, das durch Hinzufügen einer einzelnen 1 nach einer vorbestimmten Anzahl von aufeinanderfolgenden 0 oder durch Hinzufügen einer einzelnen 0 nach einer vorbestimmten Anzahl von aufeinanderfolgenden 1 gebildet ist; und
eine Empfangsvorrichtung (20; 20A bis 20C), die konfiguriert ist, um die serielle Kommunikation auszuführen und Folgendes enthält
eine Empfangseinheit (201), die konfiguriert ist, um das von der Sendeeinheit (101) gesendete Signal mit einem Ausgleichsprozess abhängig von einem Einstellwert einer Ausgleichermenge bereitzustellen,
eine Abfrageeinheit (225), die konfiguriert ist, um Daten, die in dem Ausgleichsprozess durch die Empfangseinheit (201) erlangt wurden, mit einer höheren Datenrate als eine Datenrate von den Daten abzufragen, und
eine Regeleinheit (203), die konfiguriert ist, um den Einstellwert der Ausgleichermenge beruhend auf einer Änderung der Daten entsprechend dem vorbestimmten Muster zu regulieren;
**dadurch gekennzeichnet, dass**:
die Regeleinheit (203) konfiguriert ist, um zu bestimmen, dass der Einstellwert der Ausgleichermenge in einem Fall passend ist, wo eine Bitlänge von einem Datenteil entsprechend der hinzugefügten einzelnen 0 oder der hinzugefügten einzelnen 1 gleich wie oder mehr als eine vorbestimmte Länge ist,
die Empfangseinheit (201) einen Ausgleicher (211) enthält, der konfiguriert ist, um die Ausgleichermenge abhängig von dem Ausgleichermengeneinstellwert einzustellen, der von der Regeleinheit (203) empfangen wird, wobei der Ausgleicher (211) einen variablen Widerstand (213) umfasst, der konfiguriert ist, um den Ausgleichermengeneinstellwert zu empfangen, um einen Widerstandswert des Widerstands (213) einzustellen,
wobei im Fall eines Hochfrequenzsignals eine Verstärkung erhöht wird, und im Fall eines Niederfrequenzsignals die Verstärkung durch den variablen Widerstand (213) begrenzt wird.

2. Sende- und Empfangssystem (1; 1A bis 1C) nach Anspruch 1,
wobei die Regeleinheit (203) konfiguriert ist, um in einem Fall, wo eine Frequenz der Daten einer Frequenz von einem Wiedergabetaktgeber, der von den Daten getrennt ist, entspricht, ein Frequenzsperrsignal an die Sendevorrichtung (10; 10A bis 10C) zu senden, und
wobei die Sendevorrichtung (10; 10A bis 10C) konfiguriert ist, um das Signal mit dem vorbestimmten Muster als Antwort auf einen Empfang des von der Regeleinheit (203) gesendeten Frequenzsperrsignals zu senden.

3. Sende- und Empfangssystem (1; 1A bis 1C) nach Anspruch 1,
wobei die Regeleinheit (203) konfiguriert ist, um in einem Fall, wo die Regeleinheit (203) bestimmt, dass der Einstellwert der Ausgleichermenge passend ist, ein Einstellungsvervollständigungssignal an die Sendevorrichtung (10; 10A bis 10C) zu senden, und
wobei die Sendevorrichtung (10; 10A bis 10C) konfiguriert ist, um zu beginnen, gewöhnliche Daten als Antwort auf einen Empfang des von der Regeleinheit (203) gesendeten Einstellungsvervollständigungssignals zu senden.

4. Sende- und Empfangssystem (1; 1A bis 1C) nach einem der Ansprüche 1 bis 3, ferner umfassend:
eine Spannungseinheit (112), die konfiguriert ist, um eine Signalabschwächung, die in der Übertragungsleitung verursacht wird, zu kompensieren.

5. Sende- und Empfangssystem (1; 1A bis 1C) nach einem der Ansprüche 1 bis 4,
wobei der variable Widerstand (213) einen Widerstand (R), Widerstände (R0 bis R3), die parallel zu dem Widerstand (R) angeordnet sind, und Transistoren (PchTr), die jeweils als ein Schalter für die Widerstände (R0 bis R3) funktionieren, enthält.

6. Verfahren zum Senden und Empfangen eines Signals, das in einem Sende- und Empfangssystem (1; 1A bis 1C) ausgeführt wird, das eine Sendevorrichtung (10; 10A bis 10C) mit einer Sendeeinheit (101) zum Ausführen einer seriellen Kommunikation, und eine Empfangsvorrichtung (20; 20A bis 20C) mit einer Empfangseinheit (201) zum Ausführen der seriellen Kommunikation enthält, wobei das Verfahren Folgendes umfasst:
Senden, durch die Sendevorrichtung (10; 10A bis 10C), eines Signals mit einem vorbestimmten Muster, das durch Hinzufügen einer einzelnen 1 nach einer vorbestimmten Anzahl von aufeinanderfolgenden 0 oder durch Hinzufügen einer einzelnen 0 nach einer vorbestimmten Anzahl von aufeinanderfolgenden 1 gebildet ist; und
Empfangen, durch die Empfangsvorrichtung (20; 20A bis 20C), des Signals und Bereitstellen des von der Sendeeinheit (101) gesendeten Signals mit einem Ausgleichsprozess abhängig von einem Einstellwert einer Ausgleichermenge;
Abfragen von Daten, die in dem Ausgleichsprozess erlangt wurden, mit einer höheren Datenrate als eine Datenrate von den Daten; und
Regulieren des Einstellwerts der Ausgleichermenge von einem Ausgleicher, der in der Empfangseinheit (201) bereitgestellt ist, beruhend auf einer Änderung der Daten entsprechend dem vorbestimmten Muster;
**gekennzeichnet durch**
ein Bestimmen, dass der Einstellwert der Ausgleichermenge in einem Fall passend ist, wo eine Bitlänge von einem Datenteil entsprechend der hinzugefügten einzelnen 0 oder der hinzugefügten einzelnen 1 gleich wie oder mehr als eine vorbestimmte Länge ist,
Einstellen der Ausgleichermenge abhängig von einem Ausgleichermengeneinstellwert, der in dem Regulierungsschritt empfangen wurde; wobei ein variabler Widerstand (213), der in dem Ausgleicher (211) bereitgestellt ist, den Ausgleichermengeneinstellwert empfängt, um einen Widerstandswert des variablen Widerstands (213) einzustellen,
wobei im Fall eines Hochfrequenzsignals eine Verstärkung erhöht wird, und im Fall eines Niederfrequenzsignals die Verstärkung durch den variablen Widerstand (213) begrenzt wird.

7. Empfangsvorrichtung (20; 20A bis 20C) mit Mitteln zum Ausführen einer seriellen Kommunikation mit einer Sendevorrichtung (10; 10A bis 10C), die eine Sendeeinheit (101) aufweist, wobei die Empfangsvorrichtung (20; 20A bis 20) Folgendes umfasst:
eine Empfangseinheit (201), die konfiguriert ist, um ein Signal bereitzustellen, das ein vorbestimmtes Muster hat, das durch Hinzufügen einer einzelnen 1 nach einer vorbestimmten Anzahl von aufeinanderfolgenden 0 oder durch Hinzufügen einer einzelnen 0 nach einer vorbestimmte Anzahl von aufeinanderfolgenden 1 gebildet ist, und von der Sendeeinheit (101) gesendet wird, mit einem Ausgleichsprozess der von einem Einstellwert einer Ausgleichermenge abhängt,
eine Abfrageeinheit (225), die konfiguriert ist, um Daten, die in dem Ausgleichsprozess von der Empfangseinheit (201) erlangt wurden, mit einer höheren Datenrate als eine Datenrate von den Daten abzufragen, und
eine Regeleinheit (203), die konfiguriert ist, um den Einstellwert der Ausgleichermenge beruhend auf einer Änderung der Daten entsprechend dem vorbestimmten Muster zu regulieren;
**dadurch gekennzeichnet, dass**:
die Regeleinheit (203) konfiguriert ist, um zu bestimmen, dass der Einstellwert der Ausgleichermenge in einem Fall passend ist, wo eine Bitlänge von einem Datenteil entsprechend der hinzugefügten einzelnen 0 oder der hinzugefügten einzelnen 1 gleich wie oder mehr als eine vorbestimmte Länge ist,
die Empfangseinheit (201) einen Ausgleicher (211) enthält, der konfiguriert ist, um die Ausgleichermenge abhängig von dem Ausgleichermengeneinstellwert einzustellen, der von der Regeleinheit (203) empfangen wird, wobei der Ausgleicher (211) einen variablen Widerstand (213) umfasst, der konfiguriert ist, um den Ausgleichermengeneinstellwert zu empfangen, um einen Widerstandswert des Widerstands (213) einzustellen,
wobei im Fall eines Hochfrequenzsignals eine Verstärkung erhöht wird, und im Fall eines Niederfrequenzsignals die Verstärkung durch den variablen Widerstand (213) begrenzt wird.

## Revendications

1. Système d'envoi et de réception (1, 1A à 1C) comprenant :
un appareil d'envoi (10 ; 10A à 10C) configuré pour réaliser une communication en série et qui comprend :
une unité d'envoi (101) configurée pour envoyer un signal ayant une configuration prédéterminée formée par l'ajout d'un seul 1 après un nombre prédéterminé de 0 consécutifs ou par l'ajout d'un seul 0 après un nombre prédéterminé de 1 consécutifs ;
et
un appareil de réception (20 ; 20A à 20C) configuré pour réaliser la communication en série et qui comprend
une unité de réception (201) configurée pour délivrer le signal envoyé depuis l'unité d'envoi (101) avec un processus d'égalisation dépendant d'une valeur de réglage d'une compensation par l'égaliseur,
une unité d'échantillonnage (225) configurée pour échantillonner les données obtenues dans le processus d'égalisation par l'unité de réception (201) à un débit de données supérieur au débit de données des données,
et
une unité de contrôle (203) configurée pour contrôler la valeur de réglage de la compensation par l'égaliseur sur la base d'une modification des données correspondant à la configuration prédéterminée ;
**caractérisé en ce que** :
l'unité de contrôle (203) est configurée pour déterminer que la valeur de réglage de la compensation par l'égaliseur est adéquate dans le cas où une longueur en bit d'une partie des données correspondant au seul 0 ajouté ou au seul 1 ajouté est égale ou supérieure à une longueur prédéterminée,
l'unité de réception (201) comprend un égaliseur (211) configuré pour établir la compensation par l'égaliseur en fonction de la valeur de réglage de la compensation par l'égaliseur reçue en provenance de l'unité de contrôle (203), où l'égaliseur (211) comprend une résistance variable (213) configurée pour recevoir la valeur de réglage de la compensation par l'égaliseur pour régler une valeur de résistance de la résistance (213),
où, dans le cas d'un signal de haute fréquence, un gain est accru, et dans le cas d'un signal de basse fréquence, le gain est limité par la résistance variable (213).

2. Système d'envoi et de réception (1, 1A à 1C) selon la revendication 1,
dans lequel l'unité de contrôle (203) est configurée pour envoyer un signal de verrouillage de la fréquence en direction de l'appareil d'envoi (10 ; 10A à 10C) dans le cas où une fréquence des données correspond à une fréquence d'une horloge de reproduction qui est séparée des données, et
dans lequel l'appareil d'envoi (10 ; 10A à 10C) est configuré pour envoyer le signal ayant la configuration prédéterminée en réponse à la réception du signal de verrouillage de la fréquence envoyé depuis l'unité de contrôle (203).

3. Système d'envoi et de réception (1, 1A à 1C) selon la revendication 1,
dans lequel l'unité de contrôle (203) est configurée pour envoyer un signal d'achèvement du réglage en direction de l'appareil d'envoi (10 ; 10A à 10C) dans le cas où l'unité de contrôle (203) détermine que la valeur de réglage de la compensation par l'égaliseur est adéquate, et
dans lequel l'appareil d'envoi (10 ; 10A à 10C) est configuré pour commencer à envoyer des données ordinaires en réponse à une réception du signal d'achèvement du réglage envoyé depuis l'unité de contrôle (203).

4. Système d'envoi et de réception (1, 1A à 1C) selon l'une quelconque des revendications 1 à 3, comprenant en outre :
une unité d'accentuation (112) configurée pour compenser l'atténuation du signal provoquée dans la ligne de transmission.

5. Système d'envoi et de réception (1, 1A à 1C) selon l'une quelconque des revendications 1 à 4,
dans lequel la résistance variable (213) comprend une résistance (R), des résistances (R0 à R3) disposées en parallèle par rapport à la résistance (R) et des transistors (PchTr) qui agissent en tant que commutateurs pour les résistances (R0 à R3), respectivement.

6. Procédé destiné à envoyer et à recevoir un signal réalisé dans un système d'envoi et de réception (1 ; 1A à 1C), qui comprend un appareil d'envoi (10 ; 10A à 10C) ayant une unité d'envoi (101) pour réaliser une communication en série et un appareil de réception (20 ; 20A à 20C) ayant une unité de réception (201) pour réaliser la communication en série, le procédé comprenant :
l'envoi, par l'appareil d'envoi (10 ; 10A à 10C), d'un signal ayant une configuration prédéterminée formée par l'ajout d'un seul 1 après un nombre prédéterminé de 0 consécutifs ou par l'ajout d'un seul 0 après un nombre prédéterminé de 1 consécutifs ; et
la réception, par l'appareil de réception (20 ; 20A à 20C), du signal et la délivrance du signal envoyé depuis l'unité d'envoi (101) avec un processus d'égalisation en fonction d'une valeur de réglage d'une compensation par l'égaliseur ;
l'échantillonnage des données obtenues dans le processus d'égalisation à un débit de données supérieur à un débit de données des données ; et
le contrôle de la valeur de réglage de la compensation par l'égaliseur d'un égaliseur placé dans l'unité de réception (201), sur la base d'une modification des données correspondant à la configuration prédéterminée ;
**caractérisé par**
la détermination que la valeur de réglage de la compensation par l'égaliseur est adéquate dans le cas où la longueur en bit d'une partie des données correspondant au seul 0 ajouté ou au seul 1 ajouté est égale ou supérieure à une longueur prédéterminée,
le réglage de la compensation par l'égaliseur en fonction d'une valeur de réglage de la compensation par l'égaliseur reçue dans l'étape de contrôle ;
où une résistance variable (213), qui est placée dans l'égaliseur (211), reçoit la valeur de réglage de la compensation par l'égaliseur pour régler une valeur de résistance de la résistance variable (213),
où, dans le cas d'un signal de haute fréquence, un gain est accru, et dans le cas d'un signal de basse fréquence, le gain est limité par la résistance variable (213).

7. Appareil de réception (20 ; 20A à 20C) ayant des moyens pour réaliser une communication en série avec un appareil d'envoi (10 ; 10A à 10C) ayant une unité d'envoi (101), l'appareil de réception (20 ; 20A à 20C) comprenant :
une unité de réception (201) configurée pour délivrer un signal, qui a une configuration prédéterminée formée par l'ajout d'un seul 1 après un nombre prédéterminé de 0 consécutifs ou par l'ajout d'un seul 0 après un nombre prédéterminé de 1 consécutifs et qui est envoyé depuis l'unité d'envoi (101), avec un processus d'égalisation en fonction d'une valeur de réglage d'une compensation par l'égaliseur,
une unité d'échantillonnage (225) configurée pour échantillonner les données obtenues dans le processus d'égalisation par l'unité de réception (201) à un débit de données supérieur à un débit de données des données, et
une unité de contrôle (203) configurée pour contrôler la valeur de réglage de la compensation par l'égaliseur sur la base d'une modification des données correspondant à la configuration prédéterminée ;
**caractérisé en ce que** :
l'unité de contrôle (203) est configurée pour déterminer que la valeur de réglage de la compensation par l'égaliseur est adéquate dans le cas où la longueur en bit d'une partie des données correspondant au seul 0 ajouté ou au seul 1 ajouté est égale ou supérieure à une longueur prédéterminée,
l'unité de réception (201) comprend un égaliseur (211) configuré pour régler la compensation par l'égaliseur en fonction de la valeur de réglage de la compensation par l'égaliseur reçue en provenance de l'unité de contrôle (203), où l'égaliseur (211) comprend une résistance variable (213) configurée pour recevoir la valeur de réglage de la compensation par l'égaliseur pour régler la valeur de résistance de la résistance (213),
où, dans le cas d'un signal de haute fréquence, un gain est accru, et dans le cas d'un signal de basse fréquence, le gain est limité par la résistance variable (213).
